Europäisches Patentamt

European Patent Office

Office européen des brevets

(11) Veröffentlichungsnummer : **0 170 039**
**B1**

(12) **EUROPÄISCHE PATENTSCHRIFT**

(45) Veröffentlichungstag der Patentschrift :
23.11.89

(21) Anmeldenummer : 85107713.1

(22) Anmeldetag : 21.06.85

(51) Int. Cl.⁴ : **A 01 C 3/02, F 04 C 11/00**

(54) Fördervorrichtung für inhomogene Flüssigkeiten, insbesondere Gülle.

(30) Priorität : 14.07.84 DE 3426029

(43) Veröffentlichungstag der Anmeldung :
05.02.86 Patentblatt 86/06

(45) Bekanntmachung des Hinweises auf die Patenterteilung : 23.11.89 Patentblatt 89/47

(84) Benannte Vertragsstaaten :
BE CH DE FR GB IT LI NL SE

(56) Entgegenhaltungen :
DE--A-- 2 002 518
FR--A-- 919 498
GB--A-- 2 057 572

(73) Patentinhaber : Hugo Vogelsang Fass- und Maschinenbau GmbH

D-4572 Essen (DE)

(72) Erfinder : Verhülsdonk, Burkhard, Dipl.-Ing.
Löninger Strasse 18
D-4571 Bunnen (DE)

(74) Vertreter : Busse & Busse Patentanwälte
Postfach 1226 Grosshandelsring 6
D-4500 Osnabrück (DE)

Jouve, 18, rue St-Denis, 75001 Paris, France

## Beschreibung

Die Erfindung betrifft eine Fördervorrichtung für Flüssigkeiten gemäß dem Oberbegriff des Anspruchs 1.

Fördervorrichtungen für Gülle mit einer über eine Verbindungsleitung an einen Flüssigkeitsvorratsbehälter anschließbaren Verteilervorrichtung, die einen Verteilerbehälter für zugeführte Flüssigkeit mit einer Mehrzahl von Austrittsöffnungen für anschließbare Austragleitungen umfaßt, werden in erster Linie zum Ausbringen von Gülle auf landwirtschaftlichen Nutzflächen verwendet, können jedoch auch zum Fördern anderer inhomogener Flüssigkeiten, z. B. von Flüssigfutter in landwirtschaftlichen Tierhaltungen, benutzt werden.

Zur Erzeugung von Einzelströmen der zugeführten Flüssigkeit ist bei den bekannten Fördervorrichtungen der Verteilerbehälter der Verteilervorrichtung als Beruhigungsraum ausgebildet und mit einer Anzahl gleich großer Öffnungen versehen. Voraussetzung für eine gleichmäßige Aufteilung des zugeführten Flüssigkeitsstroms ist hierbei neben einem gleichen Öffnungsquerschnitt eine gleiche Druckdifferenz an jeder Austrittsöffnung. Während ein gleich großer Öffnungsquerschnitt problemlos zu verwirklichen ist, bereitet die zweite Bedingung bei inhomogenen Flüssigkeiten, insbesondere bei Gülle, erhebliche Schwierigkeiten, da in Abhängigkeit von der Länge und der Form der nachfolgenden Strömungsführungen ein ungleichmäßiger Strömungswiderstand einen nachteiligen Einfluß auf die Verteilungsgüte nimmt. Besondere Probleme bereiten Fremdkörper, die zu Verstopfungen in einzelnen Strömungskanälen führen können, wobei dann über die offenen Strömungskanäle entsprechend erhöhte Flüssigkeitsmengen ausgetragen werden.

Aus der GB-A-2 057 572 ist eine Fördervorrichtung für Flüssigkeiten bekannt, die aus einer über eine Verbindungsleitung an einen Flüssigkeitsvorratsbehälter anschließbaren Verteilervorrichtung besteht, die einen Verteilerbehälter für zugeführte Flüssigkeit mit einer Mehrzahl von Austrittsöffnungen für anschließbare Austragleitungen umfaßt, wobei der Verteilerbehälter durch Zwischenwände in mehrere voneinander getrennte, jeweils eine Drehpumpe innerhalb bogenförmiger Gehäusewände des Verteilerbehälters enthaltende Förderräume unterteilt ist und sämtliche Förderräume an ihrer Saugseite gemeinsam an die Verbindungsleitung anschließbar sowie an ihrer Druckseite jeweils mit einem gesonderten Auslaß versehen sind. Die bekannte Fördervorrichtung für Flüssigkeiten betrifft eine Dosiervorrichtung zur Verwendung in Hydraulikanlagen, wobei in aller Regel mit Filtereinrichtungen gearbeitet wird, um die Anlage vor Verunreinigungen jeder Art zu schützen. Hierbei sieht die bekannte Fördervorrichtung für die in den einzelnen Förderräumen des Verteilerbehälters angeordneten Drehpumpen jeweils eine Zahnradpumpe vor, die jedoch zum Fördern inhomogener bzw. mehr oder weniger stark verunreinigter Flüssigkeiten wie Gülle, die Stroh, Steine, Sand, Tierkadaver und dgl. Fremdkörper enthalten kann, völlig ungeeignet sind, da sie wegen der engen Arbeitsräume sehr schnell verstopft werden.

Aus der DE-A-2 002 518 ist es bei solchen Fördervorrichtungen für Flüssigkeiten, wie einer Dickstoff-, Gülle- bzw. Schmutzwasserpumpe, bereits bekannt, eine Drehpumpe zur Förderung von Gülle als Drehkolbenpumpe auszubilden, wobei ferner im Förderraum die Höhe des von der bogenförmigen Gehäusewand und dem jeweiligen Drehkolben begrenzten Volumens in etwa gleich dessen Breite ist und wobei der Austrittsquerschnitt des Auslasses des Förderraums zumindest gleich dem freien Förderquerschnitt der Drehkolbenpumpe im Förderraum bemessen ist. Es handelt sich hierbei jedoch um eine Fördervorrichtung, bei der der Verteilerbehälter nicht in mehrere Förderräume unterteilt ist, sondern nur einen einzigen Förderraum mit der in diesem untergebrachten Drehkolbenpumpe und mit einer einzigen Saugöffnung sowie einer einzigen Auslaßöffnung umfaßt.

Der Erfindung liegt die Aufgabe zugrunde, eine Fördervorrichtung für insbesondere Gülle zu schaffen, die eine kontrollierte Verteilung der zugeführten Flüssigkeit auf mehrere Einzelströme gewährleistet und gegenüber Verstopfungen durch Fremdkörper und dgl. Verunreinigungen unempfindlich ist.

Diese Aufgabe wird nach der Erfindung durch eine Ausgestaltung der Fördervorrichtung entsprechend dem Patentanspruch 1 gelöst. Je nach dem, ob die einzelnen Förderräume der Verteilervorrichtung mit ihren Drehkolbenpumpen gleich groß oder unterschiedlich dimensioniert sind, kann bei dieser Ausgestaltung zwangläufig eine Aufteilung der zugeführten Flüssigkeit in gleich große oder fest vorgegebene verschieden große Einzelströme erfolgen. Ein unterschiedliches Druckniveau der erzeugten Einzelströme, das z. B. durch Unterschiede in der Länge, dem Durchmesser und der Form der Austragsleitungen bzw. nachfolgenden Strömungsführungen hervorgerufen werden kann, bleibt dabei ohne einen nennenswerten Einfluß auf die Verteilungsgüte, da die Drehkolbenpumpen zwangläufig die vorgegebenen Teilmengen fördern. Dabei gewährleistet die Ausstattung der einzelnen, voneinander getrennten Förderräume mit Drehkolbenpumpen, insbesondere Roots-Drehkolbenpumpen, aufgrund des Verdrängungsprinzips, nach dem diese arbeiten, eine weitgehende Unempfindlichkeit der Verteilervorrichtung gegenüber Verstopfungen, da selbst größere Fremdkörper durch den Zwangsumlauf der paarweise zusammenwirkenden Drehkolben durch die Förderräume hindurchgefördert werden. Durch die Anpassung der Breite der Förderräume an die auslegungsgemäß entsprechend den zu fördernden Volumen gewählte Höhe der Förderräume sowie die Bemessung der einzelnen Förderraumauslässe zumindest gleich dem freien Förderquerschnitt in jedem Förderraum sind zudem im Pumpenbereich zur weiteren Herabsetzung der Verstopfungsgefahr Engstellen vermieden. Schließlich dient auch die mittlere Einziehung an der Saugseite der Zwischenwände der Förderräume der Vermeidung von Verstopfungen durch insbesondere langfaseriges, zum Wickeln neigendes Gut, wie Heu- oder Strohbestandteile, die in der Gülle enthalten und ihrerseits die Ursache für Verstopfungen sein können, jedoch dank der erfindungsgemäßen Ausgestaltung, sofern sich solche Bestandteile an den Stirnkanten der Zwischenwände bei der Zuförderung der Flüssigkeit ansetzen, von den umlaufenden Drehkolben abgestreift und zwangläufig in die Förderräume hineinbewegt werden können.

Die Saugseite der Verteilervorrichtung wird im Regelfall mit der Druckseite einer Förderpumpe verbunden, die in die Verbindungsleitung zum Flüssigkeitsvorratsbehälter einbezogen ist und durch deren Förderstrom die Drehkolbenpumpen des Verteilerbehälters sodann in Drehung versetzt werden. Die Drehkolbenpaare der einzelnen Pumpen sind dabei vorteilhaft in ihren Winkelstellungen gegeneinander versetzt auf ihren Wellen angeordnet, um einen druckstoßfreien, möglichst gleichmäßigen Umlauf der Drehkolbenpaare zu gewährleisten. Der gegenseitige Winkelversatz bemißt sich vorzugsweise nach der Formel

$$\Delta \pi = 180^{\circ}/(n_F \times n_P),$$

wobei $n_F$ = Anzahl der Flügel jedes Drehkolbens und $n_P$ = Anzahl der Drehkolbenpumpen. Diese Anordnung führt dazu, daß die vorlaufenden und die nachlaufenden Flanken zusammenwirkender Drehkolben von mindestens zwei der einzelnen Pumpen im Bereich der von den Durchstoßpunkten der Rollkreise mit der Drehkolbenoberfläche gebildeten Berührungslinie während der Kolbenumlaufbewegung in Mitnahmeeingriff bringbar sind. Da dieser Mitnahmeeingriff im wesentlichen gleitfrei erfolgt, ist ein Gleichlaufgetriebe, z. B. ein Zahnradpaar, für die Synchronisierung der Drehkolbenpaare entbehrlich.

Bei einem Fremdantrieb der Verteilervorrichtung ist eine Verlängerung für eine oder beide Wellen der Drehkolbenpumpen aus dem Verteilerbehälter heraus für eine Verbindung mit einem geeigneten äußeren Antrieb vorgesehen. In diesem Fall wirkt die Saugseite der Verteilervorrichtung wie die Saugseite einer selbstansaugenden Drehkolbenpumpe, wobei ein Gleichlaufgetriebe für die gleichmäßige Übertragung des Antriebsdrehmoments auf beide Wellen der Drehkolbenpumpen sorgt.

Im übrigen sind die Drehkolben vorzugsweise mit einem elastischen Mantel versehen, der eine Förderung selbst größerer Fremdkörper ohne Blockieren weiter begünstigt.

Weitere Merkmale und Vorteile der Erfindung ergeben sich aus den weiteren Unteransprüchen und der nachstehenden Beschreibung in Verbindung mit der Zeichnung, in der zwei Ausführungsbeispiele des Gegenstands der Erfindung schematisch veranschaulicht sind. In der Zeichnung zeigen:

Fig. 1 ein erstes Ausführungsbeispiel einer Fördervorrichtung für inhomogene Flüssigkeiten, insbesondere Gülle, in einem Horizontalschnitt,

Fig. 2 einen Vertikalschnitt durch einen der jeweils eine Roots-Drehkolbenpumpe enthaltenden einzelnen Förderräume der Vorrichtung nach Fig. 1,

Fig. 3 u. 4 Schnittdarstellungen entspr. Fig. 2 zur Veranschaulichung unterschiedlicher Winkelstellungen der Drehkolben der Roots-Drehkolbenpumpen und

Fig. 5 eine teilweise geschnittene Ansicht der Vorrichtung in Richtung des Pfeils A in Fig. 2 zur Veranschaulichung eines weiteren Ausführungsbeispiels.

Die in der Zeichnung dargestellte Fördervorrichtung umfaßt einen Verteilerbehälter 1, der durch Zwischenwände 2, 3 und 4 in mehrere voneinander getrennte Förderräume unterteilt ist. Bei dem dargestellten Beispiel sind vier solche Förderräume vorgesehen, die mit 5, 6, 7 und 8 bezeichnet sind. Die beiden äußeren Förderräume 5 und 8 sind dabei von äußeren Gehäusewänden 9 und 10 begrenzt, die außenseitig jeweils mit senkrechtem Abstand übereinander angeordnete Lager- und Dichtungseinheiten 11 und 12 zur drehbaren Abstützung zweier senkrecht übereinander angeordneter Wellen 13 und 14 tragen.

Bei dem dargestellten Beispiel erstrecken sich die Wellen 13 und 14 durch sämtliche Förderräume 5, 6, 7, und 8 hindurch, wobei in den Zwischenwänden 2, 3 und 4 abgedichtete Durchlässe für den Wellendurchtritt belassen sind. Auf den Wellen 13 und 14 ist in jedem Förderraum 5, 6, 7 und 8 ein oberer Drehkolben 15 und ein unterer Drehkolben 16 festgelegt, die paarweise nach dem bekannten Verdrängerprinzip eines Rootsgebläses bzw. einer Roots-Drehkolbenpumpe zusammenwirken, wobei die Drehkolben 8-förmig mit zwei Flügeln ausgebildet sind. Stattdessen sind auch andere Kolbenprofile oder mehrflügelige Ausführungen, z. B. eine dreiflügelige, wie ebenfalls an sich bekannt, möglich.

Entsprechend der zeichnerisch dargestellten Ausführungsform besitzen die Förderräume 5, 6, 7 und 8 des Verteilerbehälters 1 die bei Rootsgebläsen typische Querschnittsform mit einer oberen und einer unteren, entsprechend der äußeren Umlaufbahn der Drehkolben 15 und 16 bogenförmigen Gehäusewand 17 bzw. 18. In jedem der Förderräume 5, 6, 7 und 8 ist dabei durch die zusammenwirkenden Drehkolben 15 und 16 eine gesonderte Roots-Drehkolbenpumpe 19, 20, 21 und 22 gebildet, denen jedoch die Wellen 13 und 14 gemeinsam sind.

Sämtliche Förderräume 5 bis 8 mit ihren Roots-Drehkolbenpumpen 19 bis 22 stehen an ihrer Saugseite miteinander in offener Verbindung und sind dort über ein an den Verteilerbehälter 1 angeflanschtes Reduzierstück 23 gemeinsam an eine Verbindungsleitung 24 angeschlossen, die ihrerseits an einen Flüssigkeitsvorratsbehälter (nicht dargestellt) angeschlossen ist. An ihrer Druckseite sind die Förderräume 5 bis 8 hingegen jeweils mit einem gesonderten Auslaß versehen, der jeweils von einem an die Druckseite des Verteilerbehälters 1 angeflanschten Leitungsstutzen-25 gebildet ist. An die Leitungsstutzen 25 können ihrerseits gesonderte Schlauch- oder Rohrleitungen 26, 27, 28 und 29 angeschlossen werden, um beispielsweise über den Verteil-erbehälter 1 in die vier durch die Leitungen 26 bis 29 geförderten Einzelströme aufgeteilte Gülle nach dem Injizierverfahren unter die Oberfläche landwirtschaftlich genutzter Böden einzubringen.

Im Hinblick auf stark verunreinigte, zähflüssige bzw. auch langfaseriges, zum Wickeln neigendes Gut wie Heu- oder Strohbestandteile enthaltende Flüssigkeiten, die von den Roots-Drehkolbenpumpen problemlos gefördert werden können, besitzen die Zwischenwände 2, 3 und 4 der Förderräume 5 bis 8 auf deren Saugseite eine der äußeren Umlaufbahn der Drehkolben 15, 16 folgende mittlere Einziehung 30, die etwa im Schnittpunkt der gegenläufigen äußeren Umlaufbahnen der beiden Drehkolben 15, 16 jedes Drehkolbenpaares an der Saugseite jeder Pumpe 19, 20, 21. und 22 endet. Hierdurch können Fremdkörper, wie insbesondere auch langfaserige Flüssigkeitsbestandteile, die sich etwa um die Stirnkanten der Trennbleche 2, 3 und 4 bei der Zuförderung der Flüssigkeit herumschlingen, von den umlaufenden Drehkolben 15, 16 abgestreift und zwangläufig in die Förderräume hineinbewegt werden.

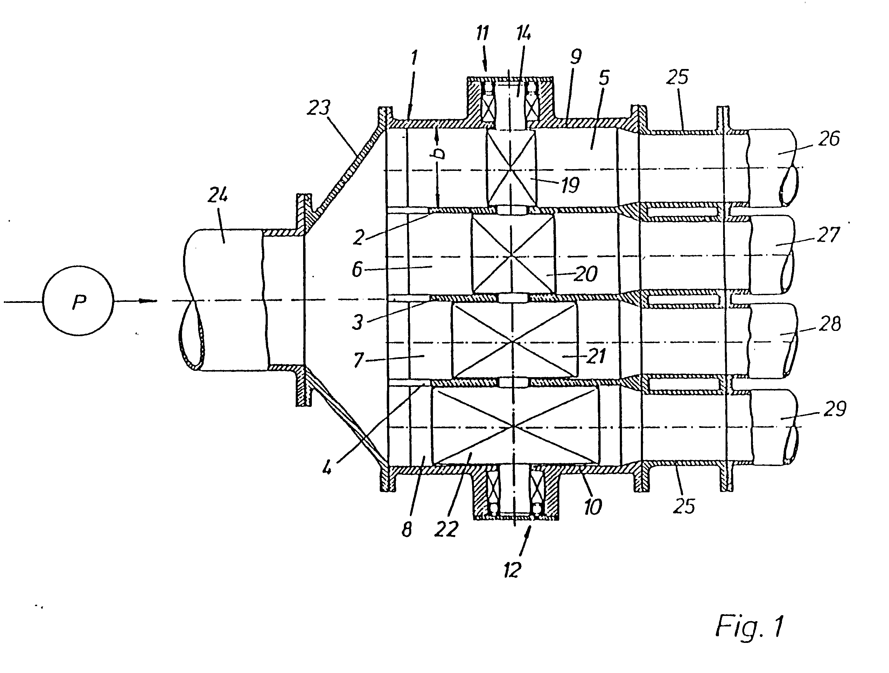

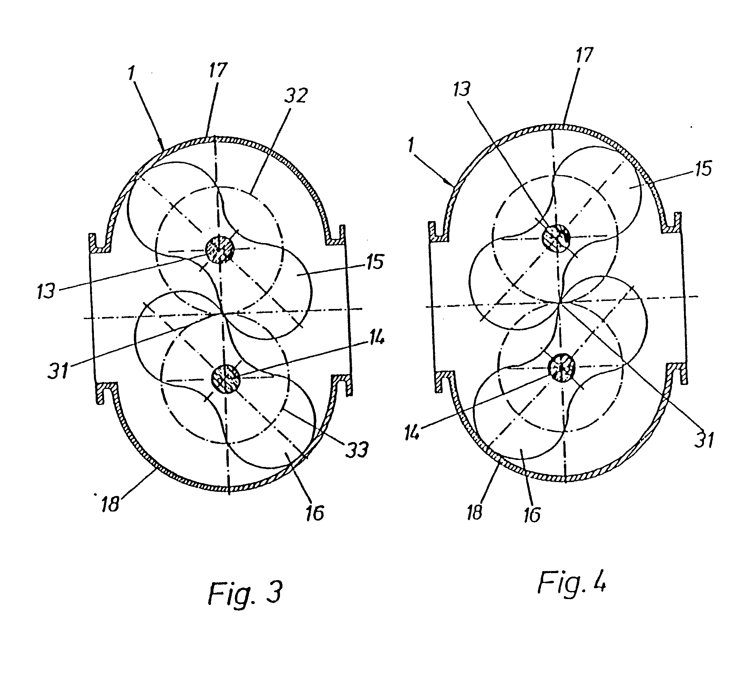

Nach einer möglichen Betriebsweise, die in Fig. 1 veranschaulicht ist, ist in die Verbindungsleitung 24 zum Flüssigkeitsvorratsbehälter eine Förderpumpe P beliebiger geeigneter Bauart einbezogen, durch deren Förderstrom die Drehkolbenpumpen 19, 20, 21 und 22 des Verteilerbehälters 1 in Drehung versetzt werden. Die Drehkolbenpaare 15, 16 der einzelnen Drehkolbenpumpen sind dabei in ihren Winkelstellungen gegeneinander versetzt auf ihren Wellen 13, 14 angeordnet, um einen gleichmäßigen Umlauf insgesamt zu ermöglichen. Dabei kann ferner der Winkelversatz derart vorgenommen sein, daß die vorlaufenden und die nachlaufenden Flanken der zusammenwirkenden Drehkolben 15, 16 der einzelnen Pumpen 19, 20, 21 und 22 im Bereich des Durchstoßpunktes 31 der den Drehkolben 15, 16 jeweils zugeordneten Rollkreise 32, 33 während der Kolbenumlaufbewegung in Mitnahmeeingriff bringbar sind. Dabei soll die Anordnung ferner so getroffen sein, daß zu jedem Zeitpunkt zumindest das Drehkolbenpaar 15, 16 zweier der Pumpen 19, 20, 21 und 22 in diesem gegenseitigen Mitnahme eingriff steht, wie es in den Fig. 3 und 4 veranschaulicht ist. Dabei werden von den betreffenden Drehkolbenpaaren Drehmomente ohne Gleitbewegung an den Kolbenflanken übertragen, womit die gegenläufigen Drehbewegungen der beiden Wellen 13 und 14 auch bei den bei dem dargestellten Ausführungsbeispiel verwendeten Drehkolbenprofilen mit nur zwei Flügeln ohne Gleichlaufgetriebe synchronisiert werden.

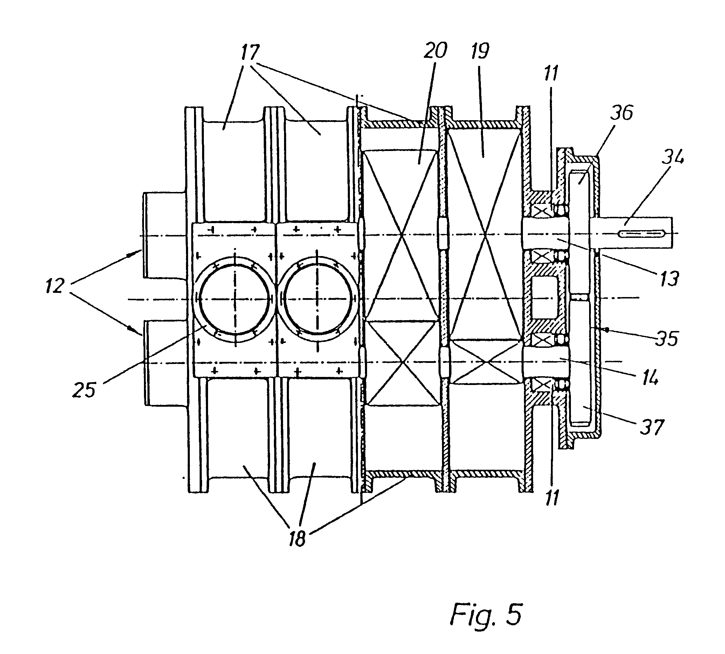

Nach einer Abwandlung, die in Fig. 5 veranschaulicht ist, ist die obere Welle 13 über die Lager- und Dichtungseinheit 11 hinaus nach außen mit einem Wellenendteil 34 verlängert, das für eine Verbindung der Welle 13 mit einem äußeren Antriebsmittel herangezogen werden kann. Hierbei ist ein Gleichlaufgetriebe 35 in Form zweier miteinander kämmender, auf den Wellen 13 und 14 festgelegter Zahnräder 36 und 37 zur Synchronisierung der beiden Wellen 13 und 14 vorgesehen.

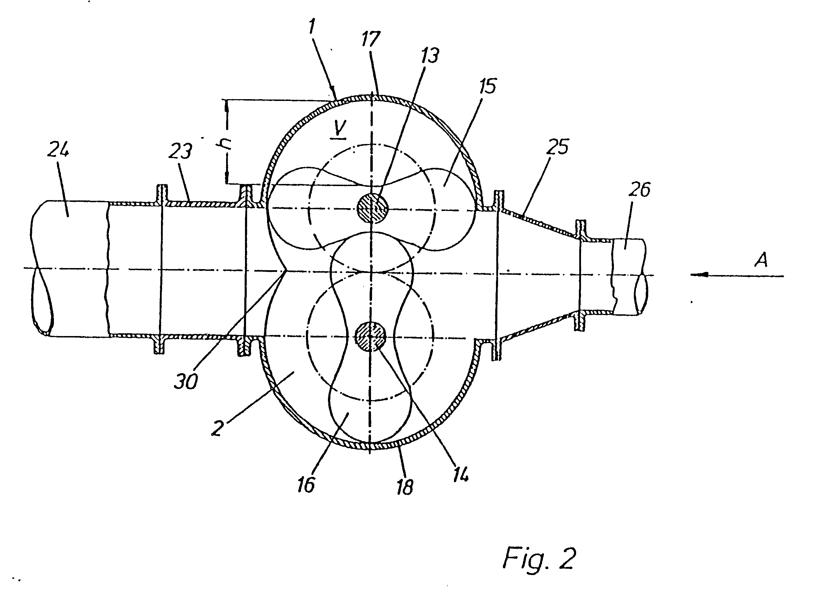

Zur Vermeidung von Engstellen im Strömungsquerschnitt der dargestellten Förder- und Verteilervorrichtung ist zweckmäßig in jedem Förderraum 5, 6, 7 und 8 die Höhe h (Fig. 2) des von der bogenförmigen Gehäusewand 17 bzw. 18 und dem jeweiligen Drehkolben 15 bzw. 16 begrenzten Volumens V in etwa gleich dessen Breite b (Fig. 1) bemessen. Aus dem gleichen Grunde ist der Austrittsquerschnitt der einzelnen Auslässe bzw. Leitungsstutzen 25 der Förderräume 5, 6, 7 und 8 zumindest gleich dem freien Förderquerschnitt entsprechend dem Volumen V der Drehkolbenpumpen 19, 20, 21 und 22 in den Förderräumen 5, 6, 7 und 8 bemessen.

## Patentansprüche

1. Fördervorrichtung für Flüssigkeiten, bestehend aus einer über eine Verbindungsleitung (24) an einen Flüssigkeitsvorratsbehälter anschließbaren Verteilervorrichtung, die einen Verteilerbehälter (1) für zugeführte Flüssigkeit mit einer Mehrzahl von Austrittsöffnungen für anschließbare Austragleitungen umfaßt, wobei der Verteilerbehälter (1) durch Zwischenwände (2, 3, 4) in mehrere voneinander getrennte, jeweils eine Drehpumpe (19, 20, 21, 22) innerhalb bogenförmiger Gehäusewände (17, 18) des Verteilerbehälters (1) enthaltende Förderräume (5, 6, 7, 8) unterteilt ist und sämtliche Förderräume (5, 6, 7, 8) an ihrer Saugseite gemeinsam an die Verbindungsleitung (24) anschließbar sowie an ihrer Druckseite jeweils mit einem gesonderten Auslaß versehen sind, dadurch gekennzeichnet, daß die Drehpumpen zur Förderung von Gülle als Drehkolbenpumpen (19, 20, 21, 22) ausgebildet sind, in jedem Förderraum (5, 6, 7, 8) die Höhe (h) des von der bogenförmigen Gehäusewand (17; 18) und dem jeweiligen Drehkolben (15; 16) begrenzten Volumens in etwa gleich dessen Breite (b) ist, während der Austrittsquerschnitt der einzelnen Auslässe der Förderräume (5, 6, 7, 8) zumindest gleich dem freien Förderquerschnitt der Drehkolbenpumpen (19, 20, 21, 22) in den Förderräumen (5, 6, 7, 8) bemessen ist, und daß die Zwischenwände (2, 3, 4) der Förderräume (5, 6, 7, 8) auf deren Saugseite mit einer der äußeren Umlaufbahn der Drehkolben (15, 16) folgenden mittleren Einziehung (30) versehen sind, die etwa im Schnittpunkt der gegenläufigen äußeren Umlaufbahnen der beiden Drehkolben (15, 16) jedes Drehkolbenpaares an der Saugseite jeder Pumpe endet.

2. Vorrichtung nach Anspruch 1, dadurch gekennzeichnet, daß die Förderräume (5, 6, 7, 8) an ihrer Saugseite miteinander in offener Verbindung stehen und ihre Auslässe an ihrer Druckseite jeweils von einem gesonderten Leitungsstutzen (25) gebildet sind.

3. Vorrichtung nach Anspruch 1 oder 2, dadurch gekennzeichnet, daß die Drehkolben (15, 16) sämtlicher Drehkolbenpumpen (19, 20, 21, 22) auf sich durch sämtliche Förderräume (5, 6, 7, 8) hindurcherstreckenden gemeinsamen Wellen (13, 14) abgestützt sind.

4. Vorrichtung nach einem der Ansprüche 1 bis 3, dadurch gekennzeichnet, daß in die Verbindungsleitung (24) zum Flüssigkeitsvorratsbehälter eine Förderpumpe (P) einbezogen ist, durch deren Förderstrom die Drehkolbenpumpen (19, 20, 21, 22) des Verteilerbehälters (1) in Drehung versetzbar sind.

5. Vorrichtung nach einem der Ansprüche 1 bis 4, dadurch gekennzeichnet, daß die Drehkolben (15, 16) der einzelnen Drehkolbenpumpen (19, 20, 21, 22) in ihren Winkelstellungen gegeneinander versetzt auf ihren Wellen (13, 14) angeordnet sind.

6. Vorrichtung nach Anspruch 5, dadurch gekennzeichnet, daß die vorlaufenden und die nachlaufenden Flanken zusammenwirkender Drehkolben (15, 16) von mindestens zwei der einzelnen Pumpen (19, 20, 21, 22) im Bereich der von den Durchstoßpunkten (31) der Rollkreise (32, 33) mit der Drehkolbenoberfläche gebildeten Berührungslinie während der Kolbenumlaufbewegung in Mitnahmeeingriff bringbar sind.

7. Vorrichtung nach Anspruch 3, dadurch gekennzeichnet, daß zumindest eine der beiden Wellen (13, 14) der Drehkolbenpumpen (19, 20, 21, 22) mit einem äußeren Antriebsmittel verbindbar ist.

8. Vorrichtung nach Anspruch 7, dadurch gekennzeichnet, daß bei einem einwelligen Antrieb der Drehkolbenpumpen (19, 20, 21, 22) ein Gleichlaufgetriebe (35) zur Synchronisierung beider Wellen (13, 14) vorgesehen ist.

9. Vorrichtung nach einem der Ansprüche 1 bis 8, dadurch gekennzeichnet, daß die Drehkolbenpumpen (19, 20, 21, 22) von Roots-Drehkolbenpumpen mit jeweils zwei Flügel definierenden, 8-förmigen Drehkolben (15, 16) gebildet sind.

## Claims

1. A conveying device for liquids, consisting of a distributing device which can be connected, via a connecting pipe (24), to a liquid reservoir and which comprises a distributing tank (1) for liquid supplied, having a plurality of outlets for discharge pipes which can be connected up, wherein the distributing tank (1) is divided by partitions (2, 3, 4) into a plurality of conveying compartments (5, 6, 7, 8) which are separated from one another and each contain a rotary pump (19, 20, 21, 22) inside arcuate housing walls (17, 18) of the distributing tank (1), and all the conveying compartments (5, 6, 7, 8) can be connected jointly to the connecting pipe (24) at their suction side and are each provided with a separate outlet at their delivery side, characterised in that the rotary pumps for conveying liquid manure are constructed in the form of rotary impeller pumps (19, 20, 21, 22), in each conveying compartment (5, 6, 7, 8), the height (h) of the volume bounded by the arcuate housing wall (17 ; 18) and the particular rotary impeller (15 ; 16) is substantially equal to its width (b), while the outlet cross-section of the individual outlets of the conveying compartments (5, 6, 7, 8) is made at least equal to the free conveying cross-section of the rotary impeller pumps (19, 20, 21, 22) in the conveying compartments (5, 6, 7, 8), and in that the partitions (2, 3, 4) of the conveying compartments (5, 6, 7, 8) are provided, at their suction side, with a central contraction (30) following the outer rotational path of the rotary impellers (15, 16), which contraction ends substantially at the point of intersection, at the suction side of each pump, of the oppositely directed outer rotational paths of the two rotary impellers (15, 16) of each pair of rotary impellers.

2. A device according to claim 1, characterised in that the conveying compartments (5, 6, 7, 8) are in open communication with one another at their suction side and their outlets at their delivery side are each formed by a separate pipe socket (25).

3. A device according to claim 1 or 2, characterised in that the rotary impellers (15, 16) of all the rotary impeller pumps (19, 20, 21, 22) are supported on common shafts (13, 14) extending through all the conveying compartments (5, 6, 7, 8).

4. A device according to any one of claims 1 to 3, characterised in that included in the connecting pipe (24) to the liquid reservoir is a feed pump (P) through the delivery of which, the rotary impeller pumps (19, 20, 21, 22) of the distributing tank (1) can be set in rotation.

5. A device according to any one of claims 1 to 4, characterised in that the rotary impellers (15, 16) of the individual rotary impeller pumps (19, 20, 21, 22) are arranged on their shafts (13, 14) offset in relation to one another in their angular positions.

6. A device according to claim 5, characterised in that the leading and the trailing edges of cooperating rotary impellers (15, 16) of at least two of the individual pumps (19, 20, 21, 22) can be brought into driving engagement in the region of the contact line formed by the points of intersection (31) of the pitch circles (32, 33) with the rotary impeller surface, during the rotational movement of the impellers.

7. A device according to claim 3, characterised in that at least one of the two shafts (13, 14) of the rotary impeller pumps (19, 20, 21, 22) can be connected to an external drive means.

8. A device according to claim 7, characterised in that with a single-shaft drive of the rotary impeller pumps (19, 20, 21, 22) a synchronizing gear (35) is provided to synchronize the two shafts (13, 14).

9. A device according to any one of claims 1 to 8, characterised in that the rotary impeller pumps (19, 20, 21, 22) are formed by Roots type rotary impeller pumps each with 8-shaped rotary impellers (15, 16) defining two lobes.

## Revendications

1. Dispositif de manutention pour des liquides, constitué d'un dispositif distributeur pouvant être raccordé par une conduite de raccordement (24) à un réservoir de liquide et comprenant une capacité de distribution (1) pour le liquide admis, présentant plusieurs orifices de sortie pour des conduites de débit qui peuvent y être raccordées, la capacité de distribution (1) étant divisée par des cloisons de séparation (2, 3, 4) en plusieurs chambres de pompage (5, 6, 7, 8) séparées les unes des autres et contenant chacune une pompe rotative (19, 20, 21, 22) à l'intérieur de parois de carter courbes (17, 18) de la capacité de distribution (1) et toutes les chambres de pompage (5, 6, 7, 8) pouvant être raccordées, à leur côté d'aspiration, collectivement à la conduite de raccordement (24) et étant pourvues, à leur côté de refoulement, chacune d'une sortie distincte, caractérisé en ce que les pompes rotatives pour la manutention du lisier ont la forme de pompes à pistons rotatifs (19, 20, 21, 22), dans chaque chambre de pompage (5, 6, 7, 8) la hauteur (h) du volume délimité par la paroi de carter courbe (17, 18) et le piston rotatif correspondant (15, 16) est à peu près égale à sa largeur (b), tandis que la section transversale de sortie des orifices individuels des chambres de pompage (5, 6, 7, 8) est prévue au moins égale à la section de refoulement libre des pompes à pistons rotatifs (19, 20, 21, 22) dans les chambres de pompage (5, 6, 7, 8), et que les cloisons intermédiaires (2, 3, 4) des chambres de pompage (5, 6, 7, 8) sont pourvues, à leur côté d'aspiration, d'un creux médian qui suit le trajet de rotation extérieur des pistons rotatifs (15, 16) et qui se termine environ au point d'intersection des trajets de rotation extérieurs en sens opposés des deux pistons rotatifs (15, 16) de chaque paire de pistons rotatifs, du côté d'aspiration de chaque pompe.

2. Dispositif suivant la revendication 1, caractérisé en ce que les chambres de pompage (5, 6, 7, 8) sont en communication ouverte l'une avec l'autre à leur côté d'aspiration et leurs orifices de sortie, à leur côté de refoulement, sont chacun formés par une tubulure (25) distincte.

3. Dispositif suivant la revendication 1 ou 2, caractérisé en ce que les pistons rotatifs (15, 16) de toutes les pompes à pistons rotatifs (19, 20, 21, 22) sont montés sur des arbres communs (13, 14) qui traversent toutes les chambres de pompage (5, 6, 7, 8).

4. Dispositif suivant l'une quelconque des revendications 1 à 3, caractérisé en ce que dans la conduite de raccordement (24) au réservoir de liquide est branchée une pompe d'alimentation (P), dont le débit permet de mettre en rotation les pompes à pistons rotatifs (19, 20, 21, 22) de la capacité de distribution (1).

5. Dispositif suivant l'une quelconque des revendications 1 à 4, caractérisé en ce que les pistons rotatifs (15, 16) des pompes à pistons rotatifs individuelles (19, 20, 21, 22) sont montés angulairement décalés les uns par rapport aux autres sur leurs arbres (13, 14).

6. Dispositif suivant la revendication 5, caractérisé en ce que les flancs avançants et reculants de pistons rotatifs coopérants (15, 16) d'au moins deux des pompes individuelles (19, 20, 21, 22) peuvent être amenés en prise d'entraînement, pendant le mouvement de rotation des pistons, dans le domaine de la ligne de contact formée par les points d'intersection (31) des cercles de roulement (32, 33) avec la surface des pistons rotatifs.

7. Dispositif suivant la revendication 3, caractérisé en ce qu'au moins un des deux arbres (13, 14) des pompes à pistons rotatifs (19, 20, 21, 22) peut être relié à un moyen d'entraînement extérieur.

8. Dispositif suivant la revendication 7, caractérisé en ce que, dans le cas d'un entraînement des pompes à pistons rotatifs (19, 20, 21, 22) par un seul arbre, une boîte de synchronisation (35) est prévue pour synchroniser les deux arbres (13, 14).

9. Dispositif suivant l'une quelconque des revendications 1 à 8, caractérisé en ce que les pompes à pistons rotatifs (19, 20, 21, 22) sont formées par des pompes à pistons rotatifs Roots comportant chacune deux pistons rotatifs en huit (15, 16) définissant deux pales.

Fig. 1

Fig. 2

Fig. 4

Fig. 3

Fig. 5

EP 0 170 039 B1